# EUROPEAN PATENT APPLICATION

(11) **EP 1 359 355 A1**
(43) Date of publication of application: **05.11.2003**
(21) Application number: 03009934.5
(22) Date of filing: 30.04.2003
(51) Int. Cl.: F16K 31/04, F16K 31/56

(54) **Valve**

(30) Priority: 01.05.2002 GB 0209948; 23.01.2003 GB 0301507
(71) Applicant: Dana Automotive Limited, Erdington, Birmingham B24 9QS (GB)
(72) Inventor: The designation of the inventor has not yet been filed
(74) Representative: Lucking, David John

(57) **Abstract**

A valve (10) includes a rotatable valve member (12), and a motor (14), the motor (14) being adapted to rotate the valve member (12) towards either a closed position or an open position, and there being resilient biasing means (16) adapted to return the valve member (12) to the open position or the closed position respectively when the motor (14) is switched off, characterised in that the resilient biasing means (16) exerts an approximately constant biasing force on the valve member (12) over the range of rotational movement of the valve member (12) between the closed and open positions.

## Description

### Description of Invention

The present invention relates to a valve, particularly to a valve with a rotational valve member, such as a ball valve member, for example, which is driven by an electric motor and returned to a rest position by means of a spring.

Electric ball valves are known in which to close or open the valve, the valve member is driven by an electric motor, and when the motor is switched off, the valve member is returned to a rest position by means of a spring. In known such valves the spring is a torsion spring which coils up as the motor drives the valve member e.g. towards the closed position. Thus, when the motor is switched off, and hence the restraining force of the motor is removed, the torsion spring uncoils and drives the valve member back to its rest position.

Disadvantages of valves of this kind are that the electrical power consumption required to drive the valve member to the closed or open position against the force of the spring, the restoring force of which increases as the spring coils up, is relatively high, and, in a valve where the valve member is driven to the closed position, there can be leakage across the valve member if the motor cannot provide sufficient torque to overcome the maximum torque provided by the torsion spring.

According to the invention we provide a valve comprising a rotatable valve member, and a motor, the motor being adapted to rotate the valve member towards either a closed position or an open position, and there being resilient biasing means adapted to return the valve member to the open position or the closed position respectively when the motor is switched off, characterised in that the resilient biasing means exerts an approximately constant biasing force on the valve member over the range of rotational movement of the valve member between the closed and open positions.

In a valve with a torsion spring, the torque exerted by the motor in order to coil the torsion spring until the valve head is in the closed position, for example, increases as the spring coils up, and similarly, the torque driving the valve head to the open position decreases as the spring uncoils. In order to provide sufficient power to drive the valve head back to the open position, the torsion spring must be relatively tightly coiled when the valve head is in the closed position, and thus the motor must be sufficiently powerful to exert the necessary force to overcome the resistance of the spring as it becomes tightly coiled.

By virtue of the provision of a constant force biasing means, less power is required to move the valve, as there is no need for the motor to be capable of overcoming the resistance of an increasingly tightly wound torsion spring in order to close the valve. Thus a smaller motor may be used to operate the valve. There is also less risk of leakage across the valve when the valve is of the kind in which the valve member is driven to the closed position, because the motor only has to exert a relatively lower torque to maintain the valve in the closed position.

Preferably, the resilient biasing means includes a pre-curled spring strip, a first end of which is connected to a drive shaft and a central portion of which is engaged with and curled around a bearing part such that rotation of the drive shaft in a first direction causes the strip to uncurl about the bearing part.

Preferably the motor is connected to the drive shaft such that operation of the motor causes rotation of the drive shaft in the first direction.

Preferably the drive shaft is connected to the motor by at least one gear.

Preferably the drive shaft is generally cylindrical and has a radius greater than an equilibrium radius of curvature of the spring strip.

Preferably the drive shaft is provided with a rotation sensing device adapted to provide an indication of the angular position of the drive shaft. Information from the rotation sensing device may thus be used to control the motor to achieve a desired degree of opening or closing of the valve.

Preferably the resilient biasing means is made of spring steel.

In one example, when the valve is for a coolant system for an internal combustion or other engine, the motor is adapted to drive the valve member towards a closed position, and the resilient biasing means is adapted to return the valve member to the open position although the invention may be applied where the valve member is driven to an open position, for use for example in a heating system.

The valve member may be a ball valve.

Embodiments of the invention will now be described with reference to the accompanying drawings, of which,
FIGURE 1 is an illustrative side view of a valve according to the invention in a closed position,
FIGURE 2 is an illustrative top view of the valve shown in Figure 1 in the closed position,
FIGURE 3 is an illustrative top view of the valve as shown in Figure 2, but with the valve in a fully open position.

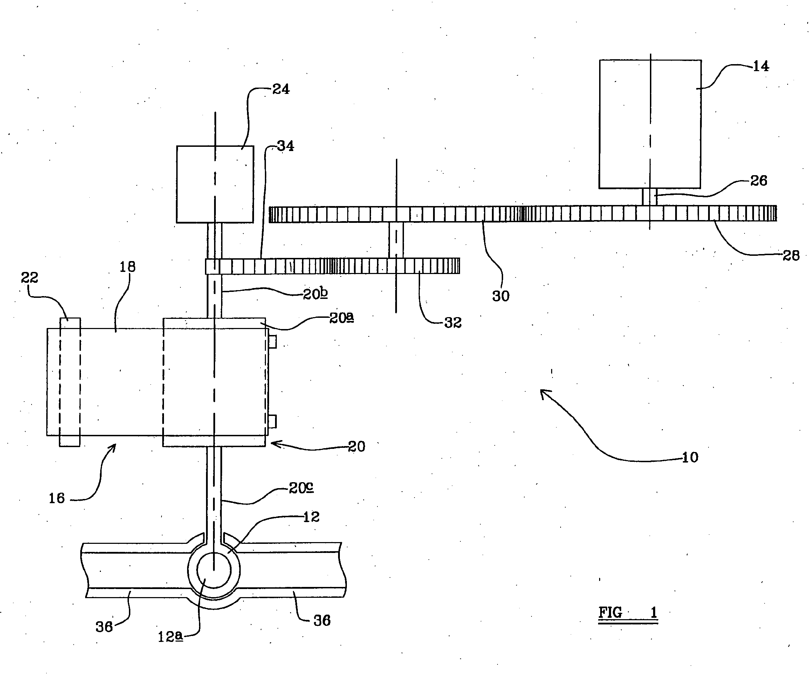

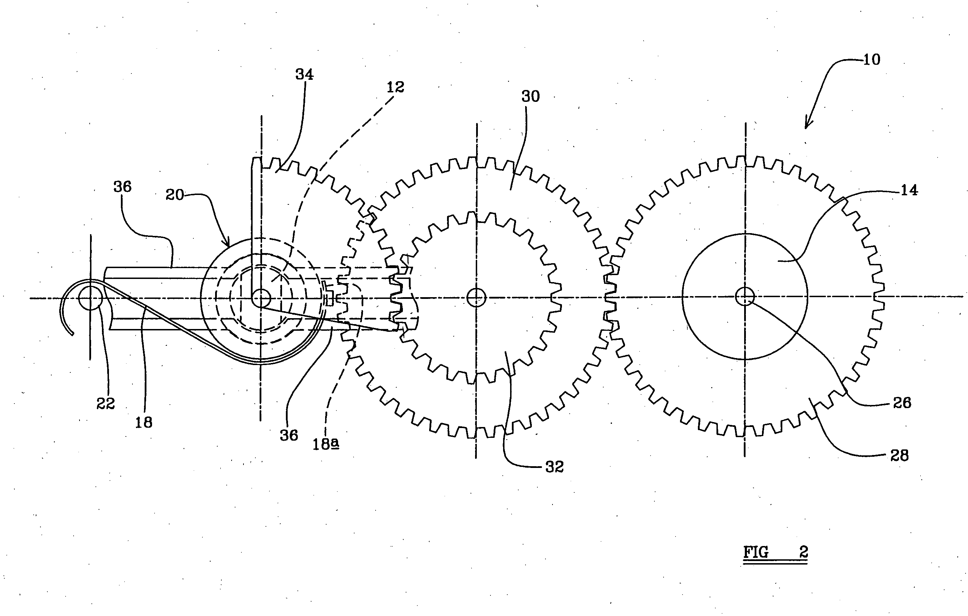

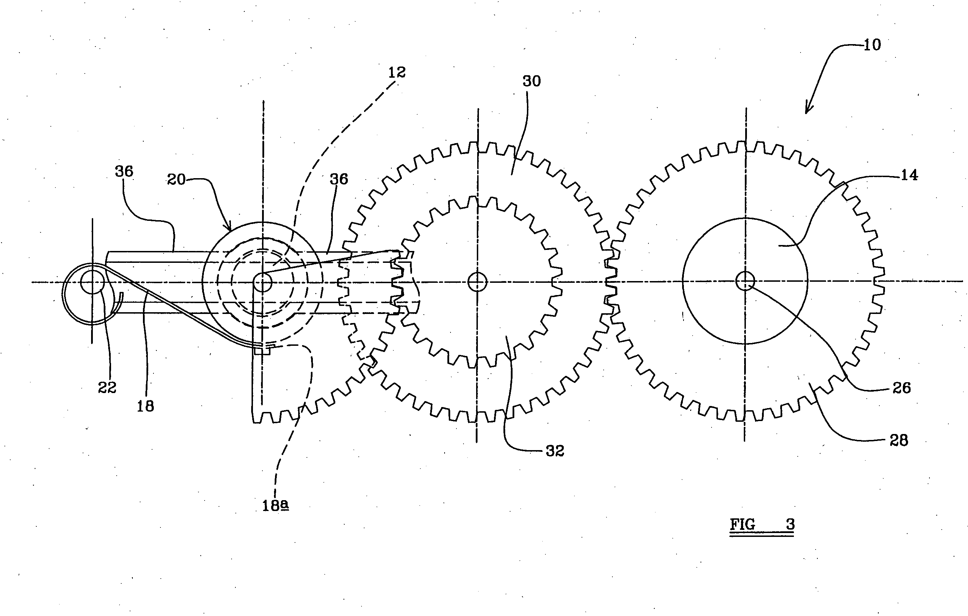

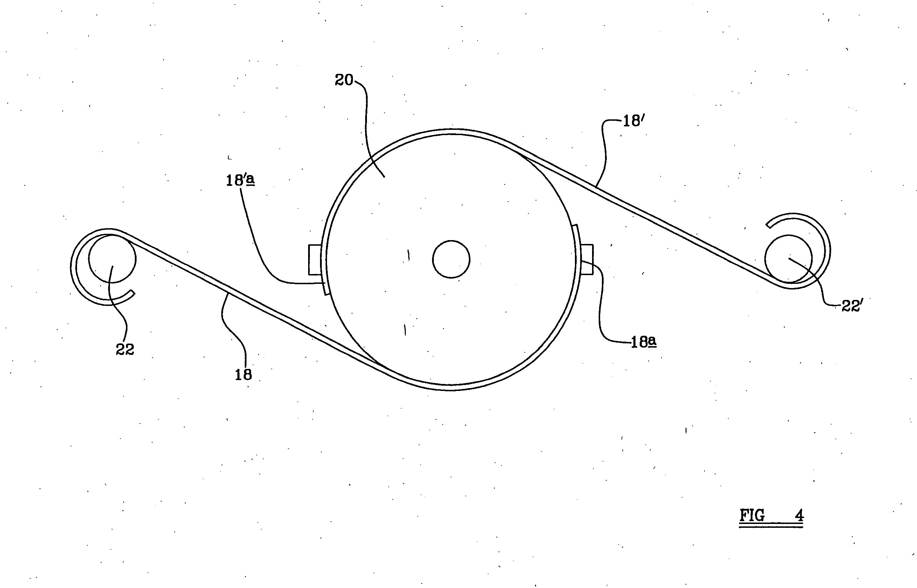

Referring now to the figures, there is shown a valve 10 including a rotatable valve member 12, and a motor 14, the motor 14 being adapted in this case to rotate the valve member 12 to a closed position as illustrated in Figures 1 and 2. The valve 10 further includes resilient biasing means 16 which is adapted to return the valve member 12 to an open position, as shown in Figure 3, when the motor 14 is switched off.

The resilient biasing means 16 includes a spring 18 which exerts an approximately constant force on the valve member 12 over the entire range of rotational movement of the valve member 12. The spring 18 in this example, is a pre-curled metal e.g. spring steel strip which is connected at a first end 18a to a generally cylindrical drive shaft 20.

The spring 18 is typically formed from flat stainless steel strip or high carbon texturised spring steel strip, which after pre-stressing and thermal processing is curled such that under rest conditions, i.e. when no external forces are exerted on the spring 18, the strip forms a tightly wound generally circular coil. When uncoiled, the spring exhibits a tendency to curl which is generally uniform regardless of the spring extension. Such springs are known, and typically used in applications such as cable, hose or cord retraction mechanisms, or as motors for wind-up mechanised toys or clocks.

The spring 18 extends from a drum 20a of the drive shaft 20 and is curled around a generally cylindrical bearing part 22. The radius of the drum 20a is greater than the equilibrium radius of curvature of the spring 18. A rotation sensing device 24, such as a potentiometer, is engaged with a first end portion 20b of the drive shaft 20, and is adapted to provide an indication of the angular position of the drive shaft 20 e.g. relative to a motor housing. This information may be used in controlling operation of the motor 14 to achieve a desired degree of opening of the valve 10.

The motor 14 is an electric motor, and has an output shaft 26 upon which is mounted a first gear wheel 28. The first gear wheel 28 meshes with a second gear wheel 30, and a third gear wheel 32 is mounted on a common shaft, coaxially, with the second gear wheel 30. The third gear wheel 32 meshes with a 90° gear segment 34 mounted on the first end portion 20b of the drive shaft 20. Thus, the motor 14 is connected to the drive shaft 20 through a series of gears 28, 30, 32, 34.

A second end portion 20c of the drive shaft 20 is connected to the valve member 12. The valve member in this example is a ball valve of generally conventional design, and thus the valve member 12 is a generally spherical ball with a cylindrical passage 12a extending centrally through the ball. The diameter of the passage 12a generally corresponds to the internal diameter of the conduit 36 in which the valve 10 is located.

When the valve member 12 is in the open position, as shown in Figure 3, the passage 12a is aligned with a longitudinal axis parallel to a longitudinal axis of the conduit 36, such that fluid may flow along the conduit through the passage 12a of the valve member 12. When the valve member 12 is in the closed position, as shown in Figures 1 and 2, the longitudinal axis of the passage 12a extends generally perpendicular to the longitudinal axis of the conduit 36, and fluid is prevented from flowing along the conduit 36 by the valve member 12.

The valve member 12 is mounted for rotation within the conduit 36 about a longitudinal axis of the drive shaft 20 which extends generally perpendicular to the longitudinal axis of the conduit 36. The valve member 12 may thus be moved from the open position to the closed position by rotating the drive shaft 20 through 90°.

When the valve member 12 is in the open position, as shown in Figure 3, a first edge portion of the gear segment 34 meshes with the third gear wheel 32, and the valve 10 may be closed by operating the motor 14 to rotate the motor output shaft 26 anticlockwise as seen from above. This movement is transmitted by means of the gears 28, 30, 32, 34 to cause anticlockwise rotation of the drive shaft 20.

The ratios of the gears 28, 30, 32, 34 are selected so that a desired number of revolutions of the motor output shaft 26 causes the drive shaft 20 to rotate through 90°, and thus the required sensitivity of valve member 12 movement may be achieved. If, for example, fine control over valve member 12 movement is required, the gear ratios should be selected such that a large number of rotations of the motor output shaft 26 are required to rotate the drive shaft through 90°.

It will, of course, be appreciated that it is not necessary to use the exact gear arrangement of this embodiment, and the number and arrangement of gears may be varied to achieve a similar result. It is also not necessary to use a series of meshing gears, and any other appropriate transmission arrangement, such as one or more friction couplings, for example, may be used to connect the motor 14 to the drive shaft 20. Alternatively, it would be possible to use a stepper motor directly to drive the drive shaft 20, in which case, no gears may be required to connect the motor output shaft 26 to the drive shaft 20.

Once the drive shaft 20 has been rotated 90° anticlockwise, a second edge portion of the gear segment 34 is meshed with the third gear wheel 32, and the valve member 12 is in the closed position, as shown in Figures 1 and 2. This rotation of the drive shaft 20 also causes the first end 18a of the spring 18 to be pulled away from the bearing part 22, and bent around a 90° segment of the drum 20a. The spring 18 is arranged such that it is bent around the drum 20a in an opposite direction to the direction in which the spring 18 has been pre-stressed to curl. The spring 18 thus forms an S-shape around the bearing part 22 and the drum 20a.

As the spring 18 is pulled away from the bearing part 22, the bearing part 22 forces the spring 18 to uncurl. This generates a restoring force tending to return the spring 18 to its curled state, and the restoring force is generally constant regardless of the degree of extension or uncurling. This restoring force thus tends to rotate the drive shaft 20 clockwise, but the motor 14 is adapted to overcome the restoring force of the spring 18.

As the restoring force of the spring 18 is generally constant regardless of its state of extension, a lower power, and hence smaller, motor 14 may be provided than would be necessary to overcome the resistance of a conventional torsion spring in the same application. In addition, as the resistance offered by the spring 18 does not increase to a maximum as the valve member 12 approaches the closed position, the likelihood of the motor 14 being unable to overcome the resistance of the spring 18 to bring the valve member to a fully closed position is reduced. Thus, the probability of leakage across the valve member 12 is diminished.

When the motor power is switched off, however, the motor 14 allows the restoring force of the spring 18, to cause the drive shaft 18 to rotate clockwise, and the valve member 12 to return to the open position.

Thus, in the event of motor power failure, the valve member 12 is, in this case, restored to the fully open position. It will be appreciated, however, that the valve 10 could, if desired, be arranged so that the motor 14 is used to drive the valve member 12 to the open position, with the spring 18 acting to restore the valve member 12 to the closed position.

Where the valve 10 is integrated with a control system, the rotation sensing potentiometer 24 may be adapted to provide the control system with an indication of the position of the valve member 12.

A valve 10 according to the invention may advantageously be used in a coolant system for an internal combustion or other engine or otherwise, in an application which requires a motor driven valve which fails safe in an open or closed position.

Whilst the embodiment described above incorporates a ball member 12, the invention may be used in conjunction with any other type of power operated valve with a rotatable valve member.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A valve (10) includes a rotatable valve member (12), and a motor (14), the motor (14) being adapted to rotate the valve member (12) towards either a closed position or an open position, and there being resilient biasing means (16) adapted to return the valve member (12) to the open position or the closed position respectively when the motor (14) is switched off, **characterised in that** the resilient biasing means (16) exerts an approximately constant biasing force on the valve member (12) over the range of rotational movement of the valve member (12) between the closed and open positions.

2. A valve (10) according to claim 1 wherein the resilient biasing means (16) includes a pre-curled spring strip (18), a first end (18a) of which is connected to a drive shaft (20) and a central portion of which is engaged with and curled around a bearing part (22) such that rotation of the drive shaft (20) in a first direction causes the strip (18) to uncurl about the bearing part (22).

3. A valve (10) according to claim 2 wherein the motor (14) is connected to the drive shaft (20) such that operation of the motor (14) causes rotation of the drive shaft (20) in the first direction.

4. A valve (10) according to claim 3 wherein the drive shaft (20) is connected to the motor (14) by at least one gear.

5. A valve (10) according to claim any one of claims 2 to 4 wherein the drive shaft (20) is generally cylindrical and has a radius greater than an equilibrium radius of curvature of the spring strip (18).

6. A valve (10) according to any one of claims 2 to 5 wherein the drive shaft (20) is provided with a rotation sensing device adapted to provide an indication of the angular position of the drive shaft (20).

7. A valve (10) according to any preceding claim wherein the resilient biasing means (16) is made of spring steel.

8. A valve (10) according to any preceding claim wherein the motor (14) is adapted to drive the valve member (12) towards the closed position, and the resilient biasing means (16) is adapted to return the valve member (12) to the open position.

9. A valve (10) according to any preceding claim further including a ball valve (10).

10. A valve (10) according to any preceding claim wherein the valve (10) is a coolant fluid valve (10) for use in an automotive engine.
